# EUROPEAN PATENT APPLICATION

(11) **EP 0 716 118 A2**
(43) Date of publication of application: **12.06.1996**
(21) Application number: 95111585.6
(22) Date of filing: 24.07.1995
(51) Int. Cl.: C08K 3/34, C08K 3/14, C08K 7/18, C08L 63/00, B29C 70/02, B29C 70/58, B29C 33/38, B29C 39/00, B29C 43/12, B29C 45/00

(54) **Filled epoxy resin composition and process for moulding static components for machines therefrom**

(30) Priority: 05.08.1994 IT GE940095
(71) Applicant: SASIB S.p.A., I-40128 Bologna (IT)
(72) Inventor: Degli Esposti, Gabriele, I-40131 Bologna (IT)
(74) Representative: Porsia, Bruno

(57) **Abstract**

The invention relates to a composite material, particularly for the fabrication of static components for machines, and a static component for machines made with the said material. The composite material consists of a mixture of at least one epoxy resin with inert fillers of quartz and/or slate granules, particularly microspheres of quartz and/or slate. Waste dust from the working of Widia may be added in the form of a mixture with the epoxy resin or in the form of deposits in suitable chambers (2,7'). Further disclosed is a process for the fabrication of static components for machines (1) by moulding, particularly by what is known as the vacuum bag (5) method. Thereby, the filled mould is placed in a bag (5) which is then evacuated so that it adheres firmly to the mould. Afterwards the epoxy resin composition is cured. Also described is the production of objects with a non-uniform distribution of the fillers therein.

## Description

The invention relates to a composite material, particularly for the fabrication of static components for machines, and a static component for machines and a process for its fabrication.

At the present time, static components for machines, such as bases, junction boxes, frames or similar are fabricated in particular by manufacturing technologies of the metalworking type, such as iron casting, the assembly by electrical welding of a number of preformed structural steel parts, and forming by removal of material. These techniques are relatively costly, both as regards the processes themselves and in respect of the necessity of having a specified quantity of materials with different morphologies ready for use for the construction of the static components.

The object of the invention is to provide a composite material, particularly for the fabrication of static components for machines, which enables the technical and functional characteristics of the static components to be maintained and/or improved, in other words which has characteristics of weight, vibration resistance and strength suitable for the purpose, combined with characteristics of easy working such as cutting properties, removal of chips, or similar, and which also permits fabrication by simple processes which are particularly suitable for the fabrication of small numbers of parts without the necessity of keeping a considerable quantity of material in store.

The invention achieves the said objects with a composite material of the type described initially, which consists of a mixture of at least one epoxy resin and filler material formed by granules of quartz and/or slate.

Preferably, the filler material is provided in the form of what are known as microspheres.

The mixture preferably consists of 35% to 55% epoxy resin by weight, while the remaining part by weight is made up of the filler material.

The quartz microspheres have a diameter which may vary from 5 to 40 microns and is preferably 20 microns.

The slate microspheres have a diameter of 1 to 10 hundredths of a millimetre, preferably 5 hundredths of a millimetre.

According to an improvement, in order to obtain an increase in the weight of the composite material, for example in order to increase the stability of the static component of a machine, the filler material may consist wholly or at least partially of waste dust from the working of Widia.

The Widia dust component may account for 8% to 10% of the weight of the filler part of the mixture.

The distribution of the quartz and/or slate fillers, and of the Widia dust, may be uniform throughout the volume of the part.

The distribution of the filler components may also advantageously be non-uniform, varying in a complementary way or according to specified mixing ratios among the different areas of the part. In fact, it is advantageous to provide a higher concentration of Widia dust in specified areas of the static components of machines, for example in the lower areas of bases, with a reduction or elimination of the filler components consisting of quartz or slate microspheres in these areas. The mixing ratio between the Widia dust and the quartz and/or slate microspheres may therefore vary considerably, either in a continuous and progressive way or discontinuously, within the filler content specified for the mixture.

The static machine component may also have areas of singularity of the distribution of the Widia dust, for example cavities containing only Widia dust, which are completely sealed from the exterior, or are completely surrounded by the epoxy resin with or without the quartz and/or slate fillers. This may be achieved, for example, by embedding bags or sealed containers of specified shapes and dimensions, containing only Widia dust, in the mixture of epoxy resin and fillers of quartz and/or slate microspheres.

In the areas of higher concentration of Widia dust, the material may be strengthened or stiffened by the addition of reinforcing fibres in the said areas, in other words by the incorporation of reinforcing fibres which are loose or in the form of orientated mats, textiles, or similar, for example glass, kevlar or carbon fibres.

Natural or synthetic fibres may also be added to the mixture of epoxy resin and filler microspheres.

The quartz microspheres impart good working qualities to the material and ensure the damping of resonance due to vibration.

A static component for a machine, such as a base, a motion junction box, uprights for frame construction or similar, therefore consists of a mixture of epoxy resins and fillers in the form of quartz microspheres.

Conversely, slate microspheres provide higher thermal stability and may therefore be used for the fabrication of parts which are subjected to thermal stress, for example for the fabrication of mould parts for thermoforming processes or similar, these parts being formed, therefore, from mixtures of epoxy resin and slate microspheres.

The microsphere form of the fillers prevents the initiation of cracks in the resin, even when the material is subjected to pressure, and imparts to the material a condition which has the fewest possible critical areas in relation to possible resonances.

The filler material in microsphere form is readily available in different diameters and is inexpensive.

The material according to the invention can be used to fabricate the static components of machines, or any other parts of different types, by simple moulding processes, either cold or at controlled temperatures, without requiring a stock of material, such as sections or parts of various types, for the construction of the said components.

These processes may consist in conventional moulding with a mould having two interacting shells.

Alternatively, the material according to the invention may be used to fabricate parts by cold moulding or controlled-temperature moulding, using only one mould half-shell and a moulding method known as the vacuum bag method. In this case, after the casting or injection of the mixture into the said mould half-shell, the latter is inserted into a bag of flexible airtight material, for example ordinary polyethylene, which is hermetically sealed and evacuated, so that all its sides adhere to the half-mould.

The Widia dust may be added in a pre-mixed state, or may be simply distributed beforehand in the areas of the lower part of the mould. It is also possible to make castings of two different mixtures, one of which contains the Widia dust in the desired quantities. Alternatively, in order to form chambers containing Widia dust, it is possible to place completely sealed bags or containers, in which the Widia dust is contained, in the desired position in the mould during the casting, in such a way that these containers are embedded in the mixture of epoxy resin and fillers of quartz and/or slate.

The moulding methods may also be used for the fabrication of mould shells consisting of a mixture of epoxy resin and slate microspheres. In this case, the moulds may be formed with wooden formwork or similar.

This is particularly advantageous for the fabrication of bases and parts of frames or similar of machines, since the methods of fabricating moulds and the said static machine parts are identical and extremely simple. Moreover, the materials are substantially identical, with the exception of the possible alternative use of quartz fillers for machine parts, since these are more workable, and slate fillers for moulds, since these are thermally stable. Identical materials may be used for resins, separating materials, mould devices, etc., both for machine parts and for mould shells.
Figs. 1 and 2 are schematic illustrations of a device for fabricating a static machine part according to the invention by what is known as sealed bag moulding, in two stages of moulding;
Fig. 3 shows the static machine part produced by the process according to the preceding figures.
Fig. 4 shows a stage of the moulding process with a mould half-shell having an alternative shape.
Fig. 5 shows a section of a stationary machine part, for example a base, in which the different distribution of the fillers is represented.
Fig. 6 shows a stage of the moulding process with a further mould half-shell.

With reference to the figures, a static machine component, for example a base part, a frame part or a junction box or similar, indicated in a general way by the numbers 1, 1', 1'', consists of a mixture of at least an epoxy resin and filler particles consisting of quartz microspheres.

Natural or synthetic fibres, such as cotton flock or glass, kevlar or carbon fibres, may be added to the epoxy resin.

One suitable type of epoxy resin is that produced by Ciba-Geigy under the name of Araldit LY 5082, with the hardener HY 5083 and cotton flock Q1 55. Quartz microspheres are readily available on the market and are produced, for example, by the company Cominder S.r.l. The quartz microspheres impart a certain weight to the mixture without initiating cracks in the resin, even if subjected to pressure, and have the lowest degree of criticality with respect to possible resonance in the static machine component. The particle size, in other words the diameter of the microspheres, may vary, and is correlated with the capacity for damping different types of resonance. In particular, the quartz microspheres may have diameters of between 5 and 40 microns, preferably 20 microns.

The proportion of epoxy resin in the mixture is between 35% and 55% by weight, while the remainder consists of the fillers, in particular the quartz microspheres.

The quartz microsphere filler imparts good workability to the machine component or to the part 1, 1', 1''.

As shown in Fig. 5, a certain quantity of waste dust from the working of Widia may be added to the mixture of epoxy resin, quartz microspheres and possibly fibres. This increases the weight of the part 1, thus contributing to a lowering of the centre of gravity and providing a high inertial mass.

The distribution of fillers in the volume of the formed part 1 may be uniform, and in this case the proportion of the Widia dust component is between 8% and 10% by weight of the inert filler part. This percentage may rise to 50% by weight of the filler part of the mixture.

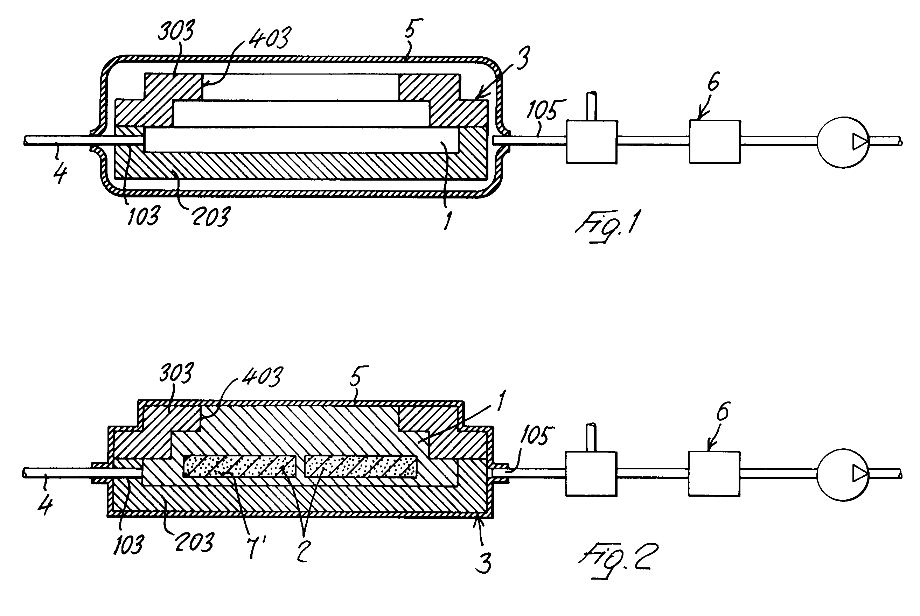

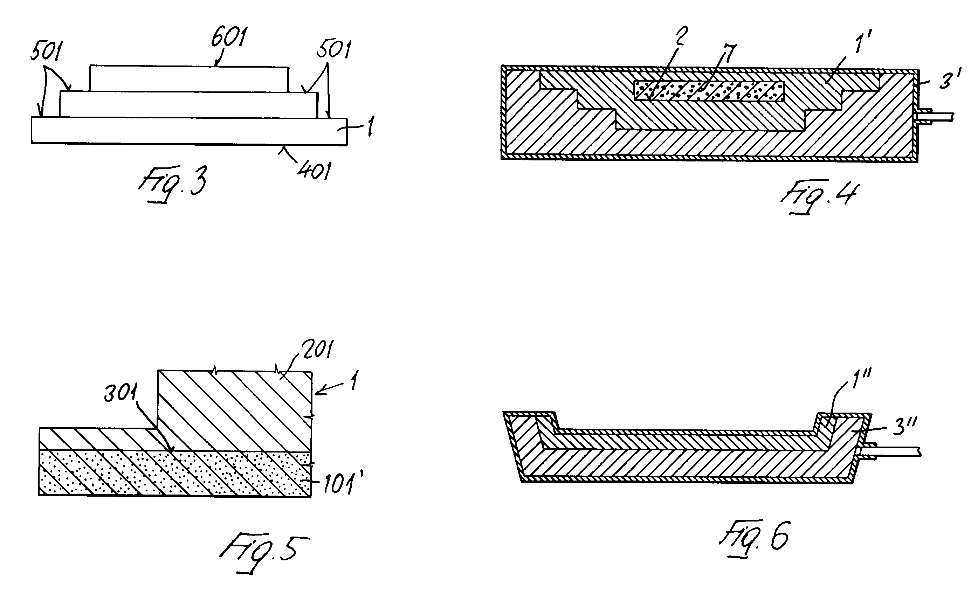

However, in order to increase the effect of displacement, particularly the effect of lowering the centre of gravity, it is advantageous to provide a non-uniform distribution of the quartz microspheres and Widia dust in the volume of the static machine component, the quartz microsphere filler component being decreased and the Widia dust component being increased substantially proportionally towards the peripheral areas of the part 1, 1' towards which the displacement of the centre of gravity is desired, and vice versa. The proportions of quartz microspheres and Widia dust may be varied in a complementary way, either progressively or discontinuously. In the peripheral area at the side of the part 1, 1' towards which it is desired to displace the centre of gravity it is possible to have only Widia dust present, while on the opposite side quartz microspheres only may be present. Fig. 5 shows a transverse section through a segment of a part of the base shown in Fig. 3. The lower area of the part 1, indicated by 101, has only dust from Widia working as a filler, while the upper area 201 has only quartz microspheres as a filler, and the change of filler is made discontinuous, 301.

With reference to Figs. 2 and 4, the Widia dust filler may be enclosed in the mixture of epoxy resin and quartz microspheres in chambers 2, which are completely sealed from the exterior, and in which the Widia dust is prevented from mixing with the epoxy resin. This may be done by making containing chambers 2 during the construction of the part, these chambers being subsequently filled with the Widia dust and then sealed from the exterior, or by embedding sealed containers, for example bags or similar, in which the Widia dust is contained, in the mixture of epoxy resin and quartz microspheres. In the areas of higher concentration of Widia dust, it is advantageous to include natural or synthetic fibres, preferably in the form of mats, felts, textiles, non-woven textiles or similar, in the mixture; these fibres may also form the containers for the Widia dust.

A machine component of the type described above may be fabricated by very simple cold or controlled-temperature moulding processes, for example injection moulding with a mould with two half-shells, or similar.

Since static machine components do not require any significant precision of dimensions and shape, except in respect of a limited number of their surfaces or areas, the fabrication process may advantageously be carried out by means of what is known as the vacuum bag moulding method.

As shown in Figs. 1, 2, 3 and 4, this method requires the use of a single mould half-shell 3, 3', 3'', into which the mixture of epoxy resin and quartz microspheres is cast or injected 4, 103 after the application of a suitable separator to the mould surfaces coming into contact with the resin. The half-shell containing the mixture is then placed in a bag 5 made of flexible and airtight material, for example ordinary polyethylene. The bag 5 is sealed from the exterior and is connected through a union 105 to an evacuation circuit indicated in a general way by 6, by means of which the bag is evacuated. The action of atmospheric pressure makes the flexible bag adhere to all sides of the half-shell 3, 3', 3'', and also directly to the mixture on the open side of the half-shell 3, 3', 3'', exerting an isotropic compressive force on the mixture in the mould 3, 3', 3''. In this case, the surface of the mixture directly adhering to the flexible bag 5 will not be perfectly formed, but will have a specific degree of irregularity, while the surfaces adhering to the mould half-shell 3, 3', 3'' will be formed precisely. However, this is unimportant, since in general the static machine parts 1, 1', 1'' have areas which must be shaped precisely, such as those at points of attachment or fixing of other parts of the machine, and others which are not used and therefore do not require precise shaping. It is therefore always possible to dispose the mould half-shell 3, 3', 3'' in a suitable way so that the side of the machine component 1, 1', 1'' in which regularity and precise shaping is not required coincides with the open side of the half-shell 3, 3', 3''.

As a first example, Figs. 1 and 2 show a mould half-shell for making a base part 1 in which precise shaping is required for the lower side 401 and for the peripheral steps 501, while the upper side 601 may have an irregular shape. In this case, since the mould half-shell 3 has undercuts, it is made in two parts, namely a lower part 203, in which is made the recess for the forming of the lower part of the part 1 corresponding to the first step, and an upper rim 303 which is made complementary to the upper steps 501. The rim 303 advantageously has a central opening 403 which allows any air bubbles to pass out of the undercut areas of the half-shell 3. Therefore, even when the part 303 is not a rim as such, it is advantageous to make relatively large openings for the discharge of air, at which openings the mixture of resin and quartz microspheres comes directly into contact with the bag 5. With this arrangement, the vacuum bag moulding method may also be used with moulds consisting of two half-shells, one or both of the half-shells being provided with relatively large air vent holes, and the compressive force of the half-shells against each other being exerted by atmospheric pressure.

The evacuation is maintained for the period required for the cross-linking or polymerization of the resin, after which the vacuum bag is again subjected to atmospheric pressure and the part is removed. In this case, it is first necessary to remove the rim 303 from the part 203 of the shell. The machine component 1 obtained in this way is illustrated in Fig. 3, and may subsequently be subjected to a possible stage of fixing on a mould for a certain period, for example 24 hours, and then also to a possible stage of further working.

The moulding process may also be carried out at controlled temperature, for example at a temperature of approximately 60°C.

The half-shells 3', 3'' for forming static machine components 1', 1'' different from that shown in Figs. 1 to 3 are shown in the variant embodiments in Figs. 4 and 6.

With reference to Fig. 4, the shape of the static machine component 1' is substantially identical to that of the part shown in Fig. 3, the only difference being that in this case a precise shaping of the upper side 601 is required, while the shape of the lower side 401 may be irregular. The mould half-shell 3' is very simple and it is not necessary to have an upper rim 303 for the formation of the undercuts. Obviously, it is also possible to use this half-shell 3' to make the part as shown in Figs. 1 to 3, but in this case the lower surface 401 will have to be subjected to a subsequent stage of working.

The machine component 1'' shown in Fig. 6 consists of a concave element in which regularity and precise shaping is required on the outside, but the shaping of the inner surface and the tolerances on the wall thickness, if any, are unimportant.

When a non-uniform distribution of the quartz microsphere and Widia dust fillers is desired, it is possible to provide two or more successive stages of local injection or casting, by which different mixtures of epoxy resin with Widia dust and/or quartz microspheres with different compositions, in other words with different quantities of quartz microspheres and/or Widia dust, are cast or injected into different areas of the half-shell 3, 3', 3''. In this way, parts formed with a distribution of fillers varying in a substantially progressive and mutually complementary way are obtained. To obtain a machine component 1 such as that shown in Fig. 5, in which the distribution of the quartz microspheres and of the Widia dust varies in a complementary and discontinuous way, it is possible, for example, to directly inject or cast a predetermined quantity of mixture of epoxy resin and Widia dust only, and then, on top of it, a mixture of epoxy resin and quartz microspheres only. Alternatively, it is possible to feed the Widia dust into the area of the mould half-shell 3, 3', 3'' specified for the purpose before the casting or injection of the epoxy resin or of the mixture of epoxy resin and quartz microspheres, thus obtaining a locally variable distribution of the proportion of Widia dust.

With reference to Figs. 2 and 4, according to a further variant, the Widia dust may be contained separately in a housing or chamber 2 formed in the machine component 1, 1'. In this case, in the casting or injection of the mixture of epoxy resin and quartz microspheres it is possible to embed, in the areas specified for this purpose, inserts 7 of material, such as expanded plastic material or similar, which will subsequently be removed by means of suitable solvents, in a way similar to what is known as the lost-wax method. Consequently, chambers will remain in the part 3, 3', and the Widia dust can be contained in these chambers, which can subsequently be sealed from the exterior. The chambers 2 may also be left empty or filled with other types of material. Inserts which are subsequently removed may also be used to form passages or similar for ducts, cables, mechanical parts, etc.

Alternatively, it is possible to embed containers 7', sealed from the exterior and containing the Widia dust or other material, in the mixture of epoxy resin and quartz microspheres. This arrangement may also be used to make passages or chambers in the machine component 3, 3'.

According to a further improvement, when the static machine component has to have particular strength characteristics, and particularly, but not only, in the areas in which the Widia dust is to be used, it is possible to add a specific quantity of natural or synthetic fibres to the mixture. The fibres may be added individually or in the form of felts, mats, textiles, non-woven textiles or similar, and the fibres which may be used are natural fibres such as cotton or synthetic fibres such as glass wool, kevlar or carbon.

With reference to one variant of the invention, when the static machine component has to have considerable thermal stability and is not required to be particularly workable, the quartz microspheres may be mixed with or completely replaced by slate microspheres. In respect of the structure of the part produced with this mixture, the action of the slate microspheres is substantially similar to that of the quartz microspheres. The slate microspheres are available on the market and are sold, for example, by the company Cominder S.r.l. The diameter of the slate microspheres may vary from 1 to 10 hundredths of a millimetre, and is preferably approximately 5 hundredths of a millimetre.

Since this mixture has good thermal stability, it is suitable for the construction of mould half-shells.

The invention therefore also provides for the making of mould half-shells 3, 3', 3'' from a mixture of epoxy resin and slate microspheres. The mixing ratios are similar to those described for the preceding mixture, and the processes of fabrication of the mould half-shells are substantially identical. For the forming, the mixture of epoxy resin and slate microspheres is injected or cast in wooden formwork or similar.

According to a further variant, the mixture for making static machine components, and/or for making moulds in this case, may have as its filler a combination of quartz microspheres and slate microspheres, either with a uniform distribution throughout the volume of the part or in a way similar to that provided for the Widia dust with different and/or complementary distribution of the quartz and slate microspheres.

## Claims

1. Composite material, particularly for the fabrication of static components for machines, characterized in that it consists of a mixture of at least one epoxy resin and filler material formed by granules of quartz and/or slate.

2. Material according to Claim 1, characterized in that the filler material is provided in the form of what are known as microspheres.

3. Material according to Claim 1 or 2, characterized in that a predetermined quantity of waste dust from the working of Widia is added to the filler material in the form of quartz and/or slate microspheres.

4. Material according to one or more of the preceding claims, characterized in that a predetermined quantity of natural and/or synthetic fibres, either in loose form or in the form of mats, felts, textiles, non-woven textiles, etc., may be added to the mixture.

5. Material according to one or more of the preceding claims, characterized in that the mixture preferably consists of 35% to 55% epoxy resin by weight, while the remaining part by weight is made up of the filler material.

6. Material according to one or more of the preceding claims, characterized in that the quartz microspheres have a diameter which may vary from 5 to 40 microns and is preferably 20 microns.

7. Material according to one or more of the preceding claims, characterized in that the slate microspheres have a diameter of 1 to 10 hundredths of a millimetre, preferably 5 hundredths of a millimetre.

8. Material according to one or more of the preceding claims, characterized in that the proportion of the Widia dust component may be between 8% and 10% by weight of the filler part of the mixture.

9. Material according to one or more of the preceding claims, characterized in that the distribution of the quartz and/or slate fillers, and of the Widia dust and fibres, may be uniform throughout the volume of the part.

10. Material according to one or more of the preceding claims, characterized in that the distribution of the filler components may be non-uniform, varying in a complementary way among the individual types of fillers provided, or according to specified mixing ratios, among the different areas of the part, within the proportion by weight reserved for the filler in the mixture.

11. Material according to one or more of the preceding claims, characterized in that the distribution of the different types of filler within the volume of the part may vary discontinuously, with the provision of limited areas of the part (1, 1', 1'') in which the epoxy resin is mixed with only one of the fillers provided, in other words with only quartz or slate microspheres or dust from working Widia, and other adjacent areas in which only one other type of filler is provided.

12. Material according to Claim 11, characterized in that the distribution of the Widia dust and quartz and/or slate microspheres varies in a mutually complementary way, preferably discontinuously (301), with the provision of areas (101, 2) in which the mixture contains Widia dust only, and areas (201) in which it contains only quartz and/or slate microspheres.

13. Material according to one or more of the preceding claims, characterized in that it has areas of singularity of the concentration of Widia, in which the Widia dust is not mixed with the epoxy resin.

14. Material according to one or more of the preceding claims, characterized in that a higher concentration of fibres is provided in the area of higher concentration of the Widia dust (101, 2) or at the peripheral boundaries of the said area.

15. Process for the fabrication, in particular, of static machine components with a material according to one or more of the preceding claims, characterized in that it consists of a process of forming by injection or casting moulding in a mould formed by two interacting half-shells of the mixture.

16. Process according to one or more of the preceding claims, characterized in that it consists of a process of forming by moulding by what is known as the vacuum bag method, comprising the following stages:
- casting or injection of the mixture into a mould consisting of a single half-shell (3, 3', 3'') previously provided with a separating substance on the surfaces coming into contact with the mixture;
- insertion of the half-shell (3, 3', 3'') into a hermetically sealed chamber formed by flexible walls, for example a bag (5);
- evacuation of the chamber (5) by connection to a vacuum source, until the walls of flexible material adhere, by the action of atmospheric pressure on all sides to the half-shell (3, 3', 3'') and to the mixture on the open side (403) of the said half-shell (3, 3', 3'');
- cross-linking or polymerization of the resin;
- introduction of air into the chamber (5), opening of the chamber (5) and removal of the part (1, 1', 1'').

17. Process according to one or more of the preceding Claims 15 or 16, characterized in that the moulding is carried out at a controlled temperature, preferably at approximately 60°C.

18. Process according to one or more of the preceding Claims 15 to 17, characterized in that it requires the injection or casting of a plurality of mixtures, in which different quantities and combinations of fillers are provided, in succession and in different areas or layers.

19. Process according to one or more of Claims 15 to 17, characterized in that it requires the feeding into specified areas of the half-shell (3, 3', 3'') of a predetermined quantity of Widia dust and the subsequent casting of epoxy resin only, for the volume containing the Widia dust, or of a mixture of epoxy resin and quartz and/or slate microspheres.

20. Process according to one or more of the preceding Claims 15 to 19, characterized in that it requires the embedding of natural and/or synthetic fibres, either in loose form or in the form of mats, felts, textiles, non-woven textiles or similar, in the mixture or in the epoxy resin only.

21. Process according to one or more of the preceding claims, characterized in that it requires the embedding of shaped pieces (7) in the casting or injection of mixture, these shaped pieces consisting of material, for example expanded plastic material, which can subsequently be removed by means of solvents, and forming cavities or chambers (2).

22. Process according to Claim 21, characterized in that it requires the filling of the chambers (2) with Widia dust and the subsequent sealing of the chambers from the exterior.

23. Process according to one or more of the preceding Claims 15 to 22, characterized in that it requires the embedding of containers (7') sealed from the exterior and containing Widia dust in the casting or injection of mixture.

24. Process according to one or more of the preceding claims, characterized in that the vacuum bag method is used in combination with a mould consisting of two half-shells (203, 303), one of which has openings (403) for the discharge of the air from any undercuts, or is in the form of a rim.

25. Process according to one or more of the preceding claims, characterized in that the mould half-shells (3, 3', 3'') for the fabrication of the parts (1, 1', 1'') are fabricated by a process of injection or casting moulding of a mixture of epoxy resin and state microspheres in formwork.

26. Static machine component, such as a base, frame, motion junction box, or similar, characterized in that it consists of a material according to one or more of Claims 1 to 14.

27. Static machine component according to Claim 26, characterized in that it is fabricated by a process according to one or more of Claims 15 to 25.
